**Europäisches Patentamt**

**European Patent Office**

**Office européen des brevets**

(19)

(11) Veröffentlichungsnummer: **0 135 698
B1**

(12) **EUROPÄISCHE PATENTSCHRIFT**

(45) Veröffentlichungstag der Patentschrift:
**28.12.88**

(21) Anmeldenummer: **84108594.7**

(22) Anmeldetag: **20.07.84**

(51) Int. Cl.⁴: **F 16 L  3/10,** E 04 D  13/08,
E 03 F  3/04, H 02 G  3/26,
F 16 B  7/08

(54) **Rohrbefestigungsschelle.**

(30) Priorität: **21.07.83  DE 3326362
23.11.83  DE 3342267**

(43) Veröffentlichungstag der Anmeldung:
**03.04.85 Patentblatt 85/14**

(45) Bekanntmachung des Hinweises auf die Patenterteilung:
**28.12.88 Patentblatt 88/52**

(84) Benannte Vertragsstaaten:
**AT BE CH FR GB LI**

(56) Entgegenhaltungen:
**EP-A- 0 053 089
DE-A- 2 437 725
DE-A- 3 119 357
DE-C- 379 259
FR-A- 1 140 965
FR-A- 2 257 838
US-A- 875 533**

**Industrial Fasteners Handbook, 1. Auflage, Trade &
Technical Press Ltd Morden, Surrey (GB), S. 446
Baubeschlagtaschenbuch 1979, 27. Auflage,
Herausgeber: G. Wohlfarth GmbH, Fachtechnik und
Merkator-Verlag, Seite 417**

(73) Patentinhaber: **Striedelmeyer, Egon, Auf dem Wingert 6,
D-5216 Niederkassel 5 (DE)**
Patentinhaber: **Thäle, Hans-Joachim,
Donnersbergstrasse 15, D-6761 Münsterappel (DE)**

(72) Erfinder: **Striedelmeyer, Egon, Auf dem Wingert 6,
D-5216 Niederkassel 5 (DE)**
Erfinder: **Thäle, Hans-Joachim, Donnersbergstrasse 15,
D-6761 Münsterappel (DE)**

(74) Vertreter: **Biermann, Wilhelm, Dr.-Ing., Morillenhang 39,
D-5100 Aachen (DE)**

## Beschreibung

Die Erfindung betrifft eine Rohrbefestigungsschelle mit einem Verankerungshaken, bei der die Rohrschelle mit einer parallel zur Mittelachse der Rohrschelle ausgerichteten Lagerhülse versehen ist, mit der die Rohrschelle auf einem rechtwinklig zum Schaft des Verankerungshakens verlaufenden Bolzen gelagert und mittels einer Schraubverbindung auf dem Bolzen festlegbar ist.

Derartige Befestigungsschellen, wie sie beispielsweise für die Befestigung von Regenabfallrohren am Mauerwerk eines Gebäudes oder für ähnliche Zwecke in unterschiedlicher Grösse zur Anwendung kommen, sollen eine starre Befestigung zwischen der Rohrschelle und dem Verankerungshaken ermöglichen.

Bei einer aus der FR-A-2 257 838 bekannten Rohrbefestigungsschelle dieser Art ist der rechtwinklig zum Verankerungshaken verlaufende Bolzen als Vierkantbolzen ausgebildet. Die an der Rohrschelle angeordnete Lagerhülse weist einen entsprechenden Vierkant-Querschnitt auf. Die Lagerhülse ist mit einem in einer axialen Ebene verlaufenden Spalt versehen, und die Befestigung der Lagerhülse auf dem Bolzen erfolgt in der Weise, dass die durch den Spalt unterbrochene Lagerhülse durch eine in einer senkrecht zur Achse der Lagerhülse verlaufenden Ebene angeordnete Schraube auf dem Bolzen festgeklemmt wird.

Bei einer anderen aus der FR-A-1 140 965 bekannten Rohrbefestigungsschelle, die für die Befestigung von heissgehenden Rohren vorgesehen ist, sind eine zylindrische Lagerhülse an dem Verankerungshaken und ein zylindrischer Bolzen an der Rohrschelle angeordnet, wobei der zylindrische Bolzen in der Lagerhülse gleiten kann.

Bekannt ist auch eine Rohrbefestigungsschelle mit einer gelenkigen und mittels einer Verschraubung festlegbaren Verbindung zwischen der Rohrschelle und einem Befestigungsbolzen (EU-A-53 089). Bei dieser bekannten Rohrbefestigungsschelle werden die radial nach aussen abgebogenen Enden der Rohrschelle über verzahnte Flächen mit ebenfalls verzahnten Flächen eines die Verbindung zum Befestigungsbolzen bewirkenden Verbindungsteils in Eingriff gebracht, auf dem die Rohrschelle in beliebiger Neigung zu dem Befestigungsbolzen befestigt werden kann. Eine Winkelverstellung der Rohrschelle innerhalb der Ebene der Rohrschelle selbst ist bei dieser Rohrbefestigungsschelle nicht möglich.

Beim Einschlagen des Verankerungshakens einer Rohrbefestigungsschelle in das Mauerwerk kommt es häufig vor, dass der Verankerungshaken seitlich verwandert oder sich seitlich verbiegt, wenn beispielsweise der den Verankerungshaken einschlagende Handwerker beim Einschlagen in seiner Bewegungsfreiheit eingeschränkt ist und infolgedessen den Verankerungshaken nicht genau in dessen Achsrichtung trifft, oder wenn der Verankerungshaken beim Eindringen in das Mauerwerk auf einen Widerstand trifft. In diesem Fall hat die Rohrschelle im eingeschlagenen Zustand nicht die gewünschte Position. Eine Korrektur der Position ist mit zusätzlichem Arbeitsaufwand verbunden. Gegebenenfalls muss dann die Rohrschelle verworfen und durch eine neue ersetzt werden.

Ausgehend von einer Rohrschelle der eingangs genannten Art liegt der Erfindung die Aufgabe zugrunde, einerseits eine Korrektur der Winkelstellung der Rohrschelle zum Verankerungshaken in der Ebene der Rohrschelle und andererseits nach Durchführung der Korrektur eine starre Verbindung zwischen der Rohrschelle und dem Verankerungshaken zu ermöglichen, die dem zu befestigenden Rohr auch in der korrigierten Winkelstellung einen dauerhaft festen und sicheren Halt gibt.

Gemäss der Erfindung wird diese Aufgabe dadurch gelöst, dass die Lagerhülse und der hiermit zusammenwirkende Bolzen zylinderförmig ausgebildet sind und dass zur Festlegung der Rohrschelle auf dem zylindrischen Bolzen in der gewünschten Winkelstellung zum Schaft des Verankerungshakens eine die Lagerhülse in axialer Richtung festklemmende Schraubverbindung dient.

Die erfindungsgemässe Rohrbefestigungsschelle erlaubt nach dem Einschlagen des Verankerungshakens in die Wand bzw. in das Mauerwerk eine Korrektur der Position der Rohrschelle in seitlicher Richtung und danach eine feste und starre Verbindung zwischen der Rohrschelle und dem Verankerungshaken.

Zweckmässige Weiterbildungen und bevorzugte Ausführungsformen der Erfindung sind Gegenstand der Unteransprüche und werden nachfolgend anhand der Zeichnungen näher beschrieben.

Von den Zeichnungen zeigt

Fig. 1 eine erfindungsgemässe Rohrbefestigungsschelle mit einer offenen Rohrschelle aus elastisch verformbarem Werkstoff, die auf dem Rohr durch federnde Klemmwirkung befestigt wird;

Fig. 2 eine Rohrbefestigungsschelle mit einer geschlossenen Rohrschelle, bei der die an den Enden des Rohrschellenbandes angeordneten Befestigungsaugen gleichzeitig als Lagerhülse und zur Befestigung der Rohrschelle auf dem Rohr dienen;

Fig. 3 eine Rohrbefestigungsschelle, bei der die Rohrschelle auf dem Rohr mit Hilfe eines Kniehebelverschlusses festgezogen wird;

Fig. 4 eine Rohrbefestigungsschelle mit einer zweiteiligen Rohrschelle aus zwei metallischen Halbringen in einer Seitenansicht; und

Fig. 5 eine Aufsicht auf die in Fig. 4 dargestellte Rohrbefestigungsschelle.

Die erfindungsgemässe Rohrbefestigungsschelle besteht aus der auf dem zu befestigenden Rohr festlegbaren eigentlichen Rohrschelle einerseits und dem Verankerungshaken 10 andererseits. Der Verankerungshaken 10 weist einen Schaft 11 auf, der in das Mauerwerk bzw. in die Wand eingetrieben wird, sowie einen vorderen rechtwinklig abgebogenen Endabschnitt 12. Dieser rechtwinklig abgebogene Endabschnitt 12 trägt in Verlängerung seiner Achse den zylindrischen Bolzen 9. In den dargestellten Fällen besteht der zylindrische Bolzen 9 aus einer beispielsweise verzinkten Stahlschraube oder einer selbstschneidenden Stahlschraube, die in die Bohrung bzw. Gewindebohrung 13 in dem Endabschnitt 12 des Verankerungshakens 10 eingeschraubt wird. Der zylindrische Bolzen 9 ist oben mit einem Kopf 14 versehen, der es ermöglicht, dass die an der eigentlichen Rohrschelle angeordnete Lagerhülse durch das Anziehen der Schraube gegebenenfalls unter Zwischenschaltung einer Ringscheibe 15 fest gegen den Endabschnitt 12 gepresst wird, wodurch die Rohrschelle auf dem Verankerungshaken in der gewünschten Position dauerhaft befestigt wird.

Der Bolzen 9 kann auf dem Endabschnitt 12 auch auf andere Weise befestigt, beispielsweise an dem Endabschnitt 12 unmittelbar angeformt oder nachträglich angeschweisst sein. Auch in diesem Fall ist dafür Sorge zu tragen, dass durch geeignete Mittel, beispielsweise durch einen Gewindeabschnitt auf dem oberen Endabschnitt des Bolzens und eine hiermit zusammenwirkende Mutter, die eigentliche Rohrschelle mit dem Verankerungshaken 10 fest verspannt werden kann.

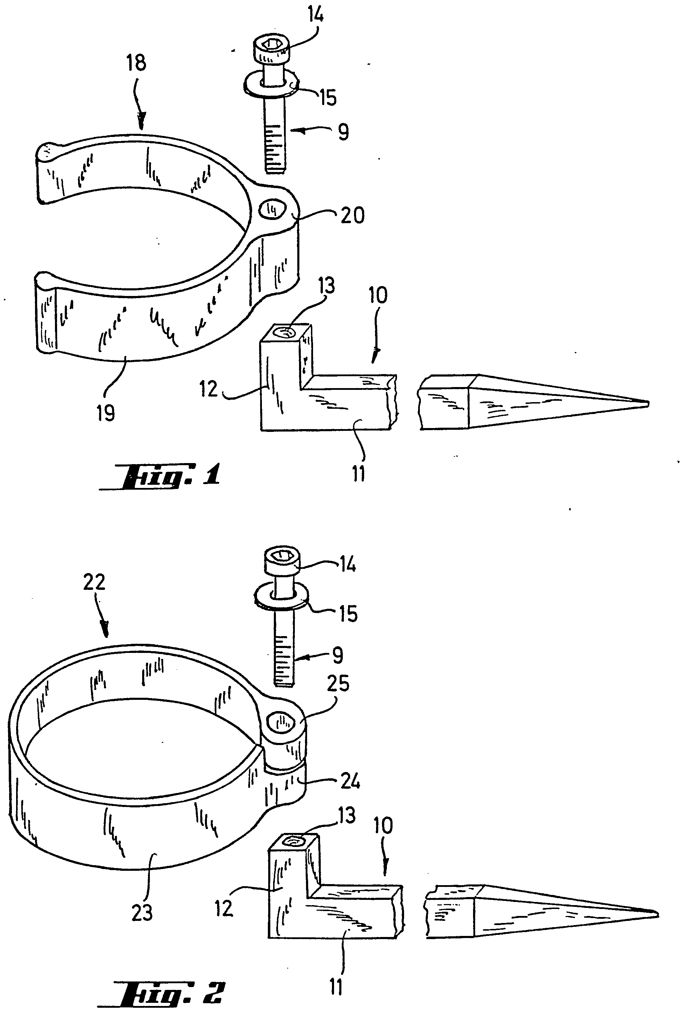

Bei der in Fig. 1 dargestellten Ausführungsform besteht die Rohrschelle 18 aus einem einstückigen offenen Ring 19 aus einem elastisch verformbaren, das heisst federnden Material. Dieser offene Ring 19 wird auf das zu befestigende Rohr aufgeschoben und auf dem Rohr durch die Klemmwirkung des federnden Werkstoffs festgelegt. An dem Ring 19 ist die Lagerhülse 20 angeordnet. Der Ring 19 kann aus federndem Metall wie Stahl, oder aus einem geeigneten elastisch federnden Kunststoff bestehen. Wenn der Ring 19 aus Metall besteht, ist die Lagerhülse 20 vorzugsweise an dem Ring 19 angeschweisst. Bei der Ausführung des Ringes 19 aus Kunststoff ist die Lagerhülse 20 unmittelbar an dem Ring 19 angeformt, das heisst Lagerhülse 20 und Ring 19 bestehen aus einem Stück, das beispielsweise nach dem Spritzgussverfahren hergestellt ist.

Bei der in Fig. 2 dargestellten Ausführungsform besteht die Rohrschelle 22 aus einem ringförmigen Band 23, das um das zu befestigende Rohr herumgelegt wird. An jedem Ende des Bandes 23 ist ein Befestigungsauge 24 bzw. 25 angeordnet. Jedes Befestigungsauge 24, 25 ist halb so hoch wie die Breite des Bandes 23, wobei das eine Auge 24 an der unteren Seite des Bandes, und das andere Auge 25 an der oberen Seite des Bandes 23 angeordnet ist, so dass die beiden Befestigungsaugen 24, 25 übereinander angeordnet gemeinsam die Lagerhülse bilden.

Die Rohrschelle 22 kann aus einem biegsamen Metallband bestehen, wobei die Befestigungsaugen 24, 25 beispielsweise aus den aufgerollten Enden des Metallbandes gebildet sein können. Stattdessen kann die Rohrschelle 22 insgesamt auch aus einem geeigneten Kunststoff bestehen, wobei in diesem Fall die Befestigungsaugen 24, 25 unmittelbar an dem Band 23 angeformt sind.

Bei der Montage der Rohrschelle 22 auf dem zu befestigenden Rohr wird die Rohrschelle 22 aufgebogen, um das Rohr herumgelegt und wieder geschlossen. Zum Verspannen auf dem Rohr wird der Schraubenbolzen 9 durch die beiden Befestigungsaugen 24, 25 hindurchgesteckt und anschliessend in die Gewindebohrung 13 in dem Verankerungshaken 10 eingeschraubt.

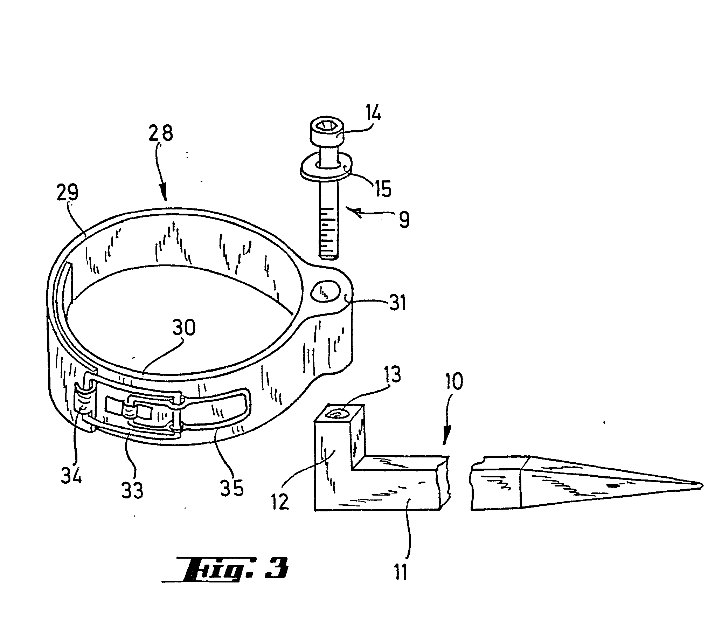

Bei der in Fig. 3 dargestellten Rohrbefestigungsschelle besteht die Rohrschelle 28 wiederum aus einem biegsamen Metall- oder Kunststoffband 29, 30, an dem die Lagerhülse 31 etwa in der Mitte des Bandes angeordnet ist. Die beiderseits der Lagerhülse 31 liegenden Bandabschnitte 29, 30 werden um das zu befestigende Rohr herumgelegt und zur Festlegung des Rohres zusammengezogen und miteinander verspannt. Die gegenseitige Verspannung der beiden Bandabschnitte 29, 30 kann mit Hilfe üblicher Mittel erfolgen. In dem dargestellten Beispiel dient für das gegenseitige Verspannen ein auf dem Bandabschnitt 30 angeordneter Kniehebelverschluss, dessen Einhängering 33 in einen Haken 34 am Ende des anderen Bandabschnitts 29 eingreift, und der durch Betätigen des Hebels 35 den Bandabschnitt 29 anzieht und so die Rohrschelle auf dem Rohr festlegt.

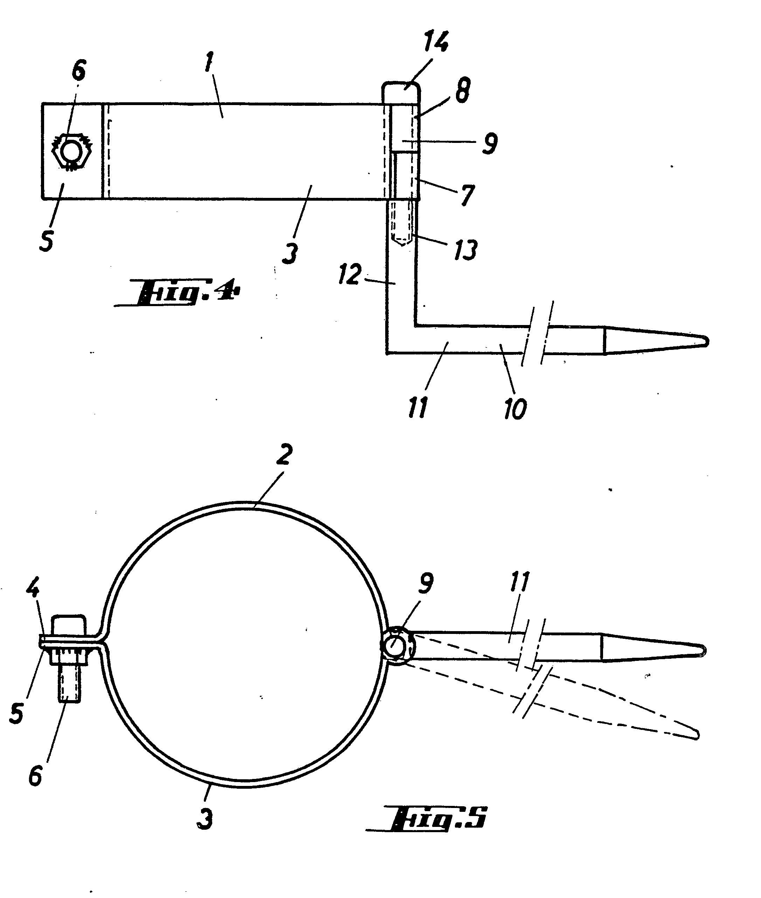

Bei der in den Fig. 4 und 5 dargestellten Rohrbefestigungsschelle besteht die eigentliche Rohrschelle 1 aus den beiden Halbringen 2 und 3. An dem einen Ende sind die beiden Halbringe 2, 3, die vorzugsweise aus verzinktem Flachstahlband bestehen, in radialer Richtung nach aussen abgewinkelt. Diese abgewinkelten Endbereiche 4, 5 sind jeweils mit einer Lochbohrung versehen und werden mittels einer Schraube 6 miteinander verspannt.

Am anderen Ende weist der Halbring 3 in der unteren Hälfte, und der Halbring 2 in der oberen Hälfte eine zungenförmige Verlängerung auf, die jeweils zu einer Hülse 7, 8 aufgerollt ist. Diese beiden Hülsen 7, 8 bilden zusammen mit dem zylindrischen Bolzen 9 das Drehlager, das einerseits die Verschwenkung der beiden Halbringe im Sinne der Öffnungs- und Schliessbewegung der Rohrschelle, und andererseits die Verschwenkung der gesamten Rohrschelle 1 um den zylindrischen Bolzen 9 gestattet.

Bei der Montage wird zunächst die Rohrschelle 1 von dem Verankerungshaken 10, der vorzugsweise ebenfalls aus feuerverzinktem Stahl besteht, gelöst. Der Verankerungshaken 10 wird nun in das Mauerwerk bzw. in die Wand eingeschlagen. Dabei bietet sich für das Einschlagen mit dem Hammer eine Aufschlagfläche für den Hammer an, die nicht von der Rohrschelle behindert ist. Wenn der Verankerungshaken 10 bis auf die erforderliche Tiefe eingeschlagen ist, wird die Rohrschelle 1 auf dem Endabschnitt 12 des Verankerungshakens 10 befestigt. Nach dem Anordnen des Rohres werden die beiden Halbringe 2, 3 um das Rohr herumgelegt und mittels der Schraube 6 miteinander verspannt. Zum Schluss wird die Rohrschelle 1 in der durch das Rohr bestimmten Lage, die so der optimalen Position entspricht, durch weiteres Einschrauben des Lagerbolzens 9

sicher und dauerhaft auf dem Verankerungshaken 10 befestigt.

**Patentansprüche**

1. Rohrbefestigungsschelle mit einem Verankerungshaken (10), bei der die Rohrschelle (1; 18; 22; 28) mit einer parallel zur Mittelachse der Rohrschelle (1; 18; 22; 28) ausgerichteten Lagerhülse (7, 8; 20; 24, 25; 31) versehen ist, mit der die Rohrschelle (1; 18; 22; 28) auf einem rechtwinklig zum Schaft (11) des Verankerungshakens (10) verlaufenden Bolzen (9) gelagert und mittels einer Schraubverbindung auf dem Bolzen (9) festlegbar ist, dadurch gekennzeichnet, dass die Lagerhülse (7, 8; 20; 24, 25; 31) und der hiermit zusammenwirkende Bolzen (9) zylinderförmig ausgebildet sind, und dass zur Festlegung der Rohrschelle (1; 18; 22; 28) auf dem zylindrischen Bolzen (9) in der gewünschten Winkelstellung zum Schaft (11) des Verankerungshakens (10) eine die Lagerhülse (7, 8; 20; 24, 25; 31) in axialer Richtung festklemmende Schraubverbindung dient.

2. Rohrbefestigungsschelle nach Anspruch 1, dadurch gekennzeichnet, dass der zylindrische Bolzen (9) als Kopfschraube mit einem Kopf (14) und mit einem unteren Schraubgewindeteil ausgebildet ist, die mit einer in dem Endabschnitt (12) des Verankerungshakens (10) anbebrachten Gewindebohrung (13) zusammenwirkt.

3. Rohrbefestigungsschelle nach Anspruch 1, dadurch gekennzeichnet, dass der zylindrische Bolzen (9) an dem Endabschnitt des Verankerungshakens angeformt oder unlösbar befestigt ist und am oberen Ende ein Schraubgewinde aufweist, das mit einer Gewindemutter zusammenwirkt.

4. Rohrbefestigungsschelle nach Anspruch 2 oder 3, dadurch gekennzeichnet, dass die Rohrschelle (18; 22; 28) einstückig ausgebildet ist.

5. Rohrbefestigungsschelle nach Anspruch 4, dadurch gekennzeichnet, dass die Rohrschelle (18) als offener Ring ausgebildet ist, aus federndem Werkstoff besteht, und auf dem zu befestigenden Rohr durch Klemmwirkung festlegbar ist.

6. Rohrbefestigungsschelle nach Anspruch 4, dadurch gekennzeichnet, dass die Rohrschelle (22) aus einem ringförmig um das Rohr herumlegbaren Band (23) besteht und an jedem Ende des Bandes (23) ein Befestigungsauge (24, 25) aufweist, dessen Höhe der halben Breite des Bandes (23) entspricht.

7. Rohrbefestigungsschelle nach Anspruch 4, dadurch gekennzeichnet, dass die Rohrschelle (28) aus einem um das Rohr herumlegbaren Band (29, 30) besteht, dessen Bandabschnitte (29, 30) miteinander verspannbar sind.

8. Rohrbefestigungsschelle nach Anspruch 7, dadurch gekennzeichnet, dass die Verspannung der beiden Bandabschnitte (29, 30) mit Hilfe eines Kniehebelverschlusses (33, 34, 35) erfolgt.

9. Rohrbefestigungsschelle nach einem oder mehreren der Ansprüche 1 bis 8, dadurch gekennzeichnet, dass die Rohrschelle (18; 22; 28) aus Kunststoff besteht.

10. Rohrbefestigungsschelle nach Anspruch 2 oder 3, dadurch gekennzeichnet, dass die Rohrschelle (1) aus zwei miteinander verschraubbaren Halbringen (2, 3) besteht.

11. Rohrbefestigungsschelle nach Anspruch 10, dadurch gekennzeichnet, dass die Lagerhülse (7, 8) von den beiden sich jeweils über einen Teil der Höhe der Halbringe (2, 3) erstreckenden, zu der Lagerhülse aufgerollten Endabschnitten der beiden Halbringe (2, 3) gebildet ist, so dass die Lagerhülse (7, 8) und der zylindrische Bolzen (9) sowohl das Schwenklager für die Öffnungs- und Schliessbewegung der beiden Halbringe (2, 3) als auch das Schwenklager für die Rohrschelle insgesamt bilden.

**Claims**

1. Pipe-fastening saddle with an anchoring hook (10), in which the pipe saddle (1; 18; 22; 28) is provided with a bearing sleeve (7, 8; 20; 24, 25; 31), which is oriented parallely to the centre line of the pipe saddle (1; 18; 22; 28) and by which the pipe saddle (1; 18; 22; 28) is borne on a bolt (9) extending at right angles to the shank (11) of the anchoring hook (10) and fixable on the bolt (9) by means of a screw connection, characterised thereby, that the bearing sleeve (7, 8; 20; 24, 25; 31) and the bolt (9) cooperating therewith are constructed in cylindrical shape and that a screw connection, which clamps the bearing sleeve (7, 8; 20; 24, 25; 31) fast in axial direction in the desired angular setting relative to the shank (11) of the anchoring hook (10), serves for the fastening of the pipe saddle (1; 18; 22; 28) on the cylindrical bolt (9).

2. Pipe-fastening saddle according to claim 1, characterised thereby, that the cylindrical bolt (9) is constructed as headed screw with a head (14) and with a lower screw thread part which cooperates with a threaded bore (13) arranged in the end portion (12) of the anchoring hook (10).

3. Pipe-fastening saddle according to claim 1, characterised thereby, that the cylindrical bolt (9) is shaped on or non-detachably fastened at the end portion of the anchoring hook and at the upper end displays a screw thread which co-operates with a threaded nut.

4. Pipe-fastening saddle according to claim 2 or 3, characterised thereby, that the pipe saddle (18; 22; 28) is integrally constructed.

5. Pipe-fastening saddle according to claim 4, characterised thereby, that the pipe saddle (18) is constructed as open ring, consists of resilient material and is fixable on the tube to be fastened by clamping effect.

6. Pipe-fastening saddle according to claim 4, characterised thereby, that the pipe saddle (22) consists of a band (23), which is layable annularly around the pipe and at each end of the band (23) displays a fastening eyelet (24, 25), the height of which corresponds to half the width of the band (23).

7. Pipe-fastening saddle according to claim 4, characterised thereby, that the pipe saddle (28) consists of a band (29, 30), which is layable around the pipe and the band portions (29, 30) of which are tightenable together.

8. Pipe-fastening saddle according to claim 7, characterised thereby, that the tightening of both the band portions (29, 30) takes place with the aid of a toggle lever fastener (33, 34, 35).

9. Pipe-fastening saddle according to one or more of the claims 1 to 8, characterised thereby, that the pipe saddle (18; 22; 28) consists of synthetic material.

10. Pipe-fastening saddle according to claim 2 or 3, characterised thereby, that the pipe saddle (1) consists of two half-rings (2, 3), which are screwable together.

11. Pipe-fastening saddle according to claim 10, characterised thereby, that the bearing sleeve (7, 8) is formed of both the end portions of both the half rings (2, 3), which end portions each extend over a respective part of the height of the half rings (2, 3) and are rolled up into the bearing sleeve so that the bearing sleeve (7, 8) and the cylindrical bolt (9) for the pivot bearing for the opening and closing movement of both the half rings (2, 3) as well as also the pivot bearing for the opening and closing movement of both the half rings (2, 3) as well as also the pivot bearing for the pipe saddle as a whole.

**Revendications**

1. Collier de fixation de tuyau à crochet d'ancrage (10), dans lequel le collier proprement dit (1; 18; 22; 28) est pourvu d'un bossage de montage (7, 8; 20; 24, 25; 31) orienté parallèlement à son axe central, au moyen duquel il est monté sur un boulon (9) s'étendant perpendiculairement à la tige (11) du crochet d'ancrage et peut être fixé sur le boulon au moyen d'un assemblage vissé, caractérisé en ce que le bossage de montage (7, 8; 20; 24, 25; 31) et le boulon (9) coopérant avec celui-ci sont de formes cylindriques, et que, pour fixer le collier proprement dit (1; 18; 22; 28) sur le boulon cylindrique (9) dans la position angulaire souhaitée par rapport à la tige (11) du crochet d'ancrage (10), un assemblage vissé bloquant le bossage de montage (7, 8; 20; 24, 25; 31) dans le sens axial est utilisé.

2. Collier de fixation de tuyau suivant la revendication 1, caractérisé en ce que le boulon cylindrique (9) a la forme d'une vis à tête comportant une tête (14) et une partie filetée inférieure, qui coopère avec une forure taraudée (13) prévue dans la section d'extrémité (12) du crochet d'ancrage (10).

3. Collier de fixation de tuyau suivant la revendication 1, caractérisé en ce que le boulon cylindrique (9) est formé sur la section d'extrémité du crochet d'ancrage ou y est fixé de manière détachable et présente, à son extrémité supérieure, un pas de vis qui coopère avec un écrou taraudé.

4. Collier de fixation de tuyau suivant la revendication 2 ou 3, caractérisé en ce que le collier proprement dit (18; 22; 28) est d'une seule pièce.

5. Collier de fixation de tuyau suivant la revendication 4, caractérisé en ce que le collier proprement dit (18) a la forme d'un anneau ouvert, est fait d'une matière faisant office de ressort et peut être bloqué sur le tuyau à fixer par effet de serrage.

6. Collier de fixation de tuyau suivant la revendication 4, caractérisé en ce que le collier proprement dit (22) est fait d'une bande annulaire (23) pouvant être posée autour du tuyau et présente, à chaque extrémité de la bande (23), un œil de fixation (24, 25) dont la hauteur correspond à la moitié de la largeur de la bande (23).

7. Collier de fixation de tuyau suivant la revendication 4, caractérisé en ce que le collier proprement dit (28) est fait d'une bande (29, 30) pouvant être placée autour du tuyau, dont les sections de bande (29, 30) peuvent être assujetties l'une à l'autre.

8. Collier de fixation de tuyau suivant la revendication 7, caractérisé en ce que l'assujettissement des deux sections de bande (29, 30) s'effectue au moyen d'une fermeture à genouillère (33, 34, 35).

9. Collier de fixation de tuyau suivant l'une quelconque des revendications 1 à 8, caractérisé en ce que le collier proprement dit (18; 22; 28) est en matière plastique.

10. Collier de fixation de tuyau suivant la revendication 2 ou 3, caractérisé en ce que le collier proprement dit (1) est formé de deux demi-anneaux (2, 3) pouvant être vissés l'un à l'autre.

11. Collier de fixation de tuyau suivant la revendication 10, caractérisé en ce que le bossage de montage (7, 8) est formé des deux sections d'extrémité des deux demi-anneaux (2, 3) roulées pour former le bossage de montage et s'étendant chacune sur une partie de la hauteur des demi-anneaux (2, 3), de sorte que le bossage de montage (7, 8) et le boulon cylindrique (9) forment ensemble le moyen de pivotement pour le mouvement d'ouverture et de fermeture des deux demi-anneaux (2, 3) et le moyen de pivotement pour le collier proprement dit.

EP 0 135 698 B1

Fig. 1

Fig. 2

7

_Fig. 3_

Fig.4

Fig.5